# EUROPÄISCHE PATENTSCHRIFT

(11) **EP 0 960 765 B1**
(45) Veröffentlichungstag und Bekanntmachung des Hinweises auf die Patenterteilung: **27.08.2003**
(21) Anmeldenummer: 99108127.4
(22) Anmeldetag: 24.04.1999
(51) Int. Cl.: B60N 2/16

(54) **Verstellmechanismus**
Adjusting mechanism
Mécanisme de réglage

(30) Priorität: 26.05.1998 DE 29809418 U
(43) Veröffentlichungstag der Anmeldung: 01.12.1999
(73) Patentinhaber: Schwarzbich, Jörg, 33615 Bielefeld (DE)
(72) Erfinder: Schwarzbich, Jörg, 33615 Bielefeld (DE)
(74) Vertreter: Wiebusch, Manfred

(56) Entgegenhaltungen:
- DE-A- 19 527 912
- DE-A- 19 726 257

## Beschreibung

Die Erfindung betrifft einen Verstellmechanismus, insbesondere für Sitzversteller in Kraftfahrzeugen, mit einem in entgegengesetzte Richtungen bewegbaren, eine Zahnung aufweisenden Antriebselement, einem Betätigungsorgan. an dem zwei Klinken derart beweglich gelagert sind, daß jeweils eine der beiden Klinken mit der Zahnung in Eingriff ist, wenn das Betätigungsorgan aus einer Neutralstellung heraus in einer Richtung längs der Zahnung bewegt wird, und mit einer Führungskontur, die die jeweilige andere Klinke von der Zahnung abhebt.

Ein solcher Verstellmechanismus wird in DE-C-195 27 912 beschrieben. Das Antriebselement ist dort ein Zahnrad, das über eine Freilaufbremse mit dem zu verstellenden Teil des Sitzes in Antriebsverbindung steht. Wenn ein als Betätigungsorgan dienender Hebel in irgendeiner Richtung aus einer Neutralstellung verschwenkt wird, so greift die jeweils vorauslaufende Klinke in die Zahnung des Zahnrads ein, so daß das Zahnrad gedreht und die Kraft über die Freilaufbremse auf den zu verstellenden Teil übertragen wird. Bei der Rückkehrbewegung des Hebels in die Neutralstellung wird das Zahnrad durch die Freilaufbremse in der erreichten Position gehalten. Auf diese Weise kann der zu verstellende Teil des Sitzes durch mehrmaliges "Pumpen" mit dem Hebel schrittweise in jeder gewünschten Richtung verstellt werden. Bei der Rückkehrbewegung des Hebels sind der Hebel und das Zahnrad entkoppelt, da die dann vorauslaufende Klinke durch die Führungskontur von der Zahnung abgehoben ist. Die Klinke, die zunächst mit der Zahnung in Eingriff war, könnte bei der Rückkehrbewegung über die Zahnung hinweggleiten. Sie würde dabei jedoch eine ratschendes Geräusch verursachen, das von einigen Anwendern als unangenehm empfunden werden mag. Aus diesem Grund ist bei dem bekannten Verstellmechanismus ein Federsystem vorgesehen, das die bei der Rückkehrbewegung des Hebels nachlaufende Klinke von der Zahnung wegdrückt.

Diese Lösung ist jedoch relativ aufwendig und hat zudem den Nachteil, daß die Kopplung zwischen Betätigungshebel und Zahnrad aufgehoben wird, sobald der Benutzer die Verstellbewegung unterbricht. Der Benutzer muß dann den Hebel erst wieder in die Neutralstellung zurückstellen, damit die Kopplung erneut hergestellt wird.

Aufgabe der Erfindung ist es, einen einfach aufgebauten und leicht zu bedienenden Verstellmechanismus der eingangs genannten Art zu schaffen, bei dem sich das Betätigungsorgan geräuscharm in die Neutralstellung zurückbewegen läßt.

Diese Aufgabe wird erfindungsgemäß gelöst durch ein längs der Zahnung bewegliches Schaltelement, das bei der Bewegung des Betätigungsorgans mitgenommen wird und bei der Rückkehr in die Neutralstellung den Eingriff zwischen Klinke und Zahnung aufhebt.

Bei der Rückkehrbewegung des Betätigungsorgans wird somit die eine Klinke von der Führungskontur und die andere Klinke von dem Schaltelement in einer von der Zahnung gelösten Stellung gehalten, so daß beide Klinken sich widerstands- und geräuscharm relativ zu der Zahnung bewegen können. Da das Schaltelement der Bewegung der Klinken folgt, wenn das Betätigungsorgan aus der Neutralstellung bewegt wird, kann es den Eingriff zwischen der Klinke und der Zahnung unabhängig von der Position dieser Klinke aufheben, sobald die Bewegungsrichtung des Betätigungsorgans umgekehrt wird. Bei einer erneuten Umkehr der Bewegungsrichtung läßt das Schaltelement wieder einen Eingriff zwischen der Klinke und der Zahnung zu, ohne daß das Betätigungsorgan zunächst wieder in die Neutralstellung zurückbewegt werden muß.

Vorteilhafte Ausgestaltungen der Erfindung sind in den Unteransprüchen angegeben.

Bevorzugt weist das Schaltelement Rampenflächen auf, die ähnlich wie die stationäre Führungskontur mit den Klinken, bzw. mit an diesen Klinken ausgebildeten Nocken zusammenwirken. Die Bewegungsbahn des Schaltelements wird vorzugsweise durch eine stationäre Führung bestimmt, die sich parallel zu der Zahnung des Antriebselements erstreckt und an demselben Bauteil ausgebildet sein kann wie die stationäre Führungskontur. Zweckmäßigerweise ist das Schaltelement derart vorgespannt, daß es reibschlüssig an der Führung anliegt. Durch diesen Reibschluß kann bei einer Umkehr der Bewegungsrichtung des Betätigungsorgans eine Relativbewegung zwischen den Klinken und dem Schaltelement hervorgerugen werden, so daß die Klinke bzw. deren Nocken auf die Rampenfläche des Schaltelements aufgleitet und dadurch von der Zahnung abgehoben wird. Wenn, wie es bei solchen Verstellmechanismen üblich ist, die Klinken elastisch gegen die Zahnung vorgespannt sind, so kann diese Vorspannung zugleich dazu benutzt werden, das Schaltelement klemmend an der Führung zu halten.

Als Antriebselement kann anstelle eines Zahnrades mit Außenzahnung auch ein Hohlrad mit Innenzahnung oder auch eine gerade Zahnstange verwendet werden. Bei Verwendung eines Innen- oder Außenzahnrades kann das Schaltelement wahlweise auch drehbar auf der Achse dieses Zahnrades gelagert sein.

Im folgenden werden Ausführungsbeispiele der Erfindung anhand der Zeichnungen näher erläutert.

Es zeigen:
- Figur 1: eine teilweise aufgeschnittene Ansicht eines Verstellmechanismus;
- Figuren 2 bis 5: vereinfachte Darstellungen des Verstellmechanismus nach Figur 1 in unterschiedlichen Stellungen;
- Figur 6: ein abgewandeltes Ausführungsbeispiel des Verstellmechanismus.

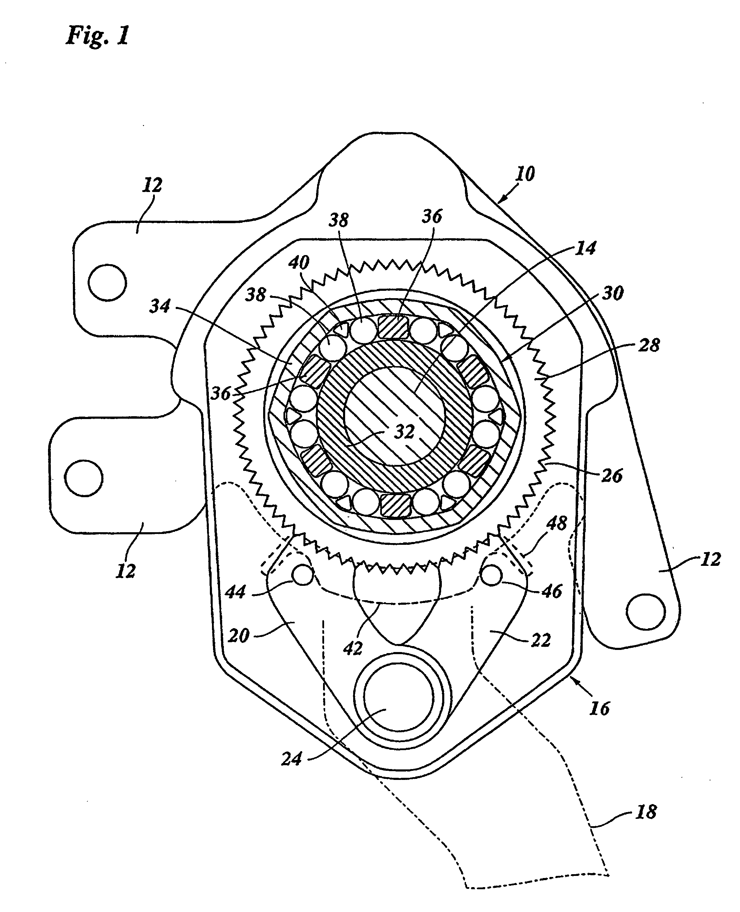

Bei dem in Figur 1 gezeigten Verstellmechanismus handelt es sich beispielsweise um einen Sitzhöhenversteller für Kraftfahrzeuge. Eine Grundplatte 10 weist Befestigungslaschen 12 auf und ist starr an einen karosseriefesten Teil des Kraftfahrzeugs zu befestigen. Die Grundplatte 10 wird von einer Welle 14 durchsetzt, die über ein nicht gezeigtes Ritzel die Höhenverstellung des Sitzrahmens des Fahrzeugsitzes bewirkt. Auf der Grundplatte 10 ist ein Gehäuse 16 montiert, an dem ein in der Zeichnung nur strichpunktiert angedeutetes Betätigungsorgan in der Form eines Hebels 18 angebracht ist. Das Gehäuse 16 und der Hebel 18 sind relativ zu der Grundplatte 10 um die Mittelachse der Welle 14 schwenkbar. Der Hebel 18 trägt zwei Klinken 20 , 22, die in bezug auf den Hebel 18 um einen gemeinsamen Gelenkzapfen 24 schwenkbar sind und mit der Zahnung 26 eines als Antriebselement dienenden Zahnrads 28 in Eingriff gebracht werden können. Die Zahnsegmente der Klinken 20, 22 sind durch nicht gezeigte Federn elastisch gegen die Zahnung 26 vorgespannt.

Das Zahnrad 28 ist in dem Gehäuse 16 untergebracht und steht mit der Welle 14 über eine Freilaufbremse 30 in Antriebsverbindung. Der Aufbau und die Wirkungsweise der Freilaufbremse 30 werden im einzelnen in EP-B-0 497 007 beschrieben und sollen deshalb hier nur kurz dargestellt werden. Ein Innenring 32 der Freilaufbremse ist starr an der Grundplatte 10 gehalten. Ein Außenring 34 ist topfförmig ausgebildet und starr mit der Welle 14 verbunden. Der in der Zeichnung nicht erkennbare Boden des Außenrings 34 weist in Umfangsrichtung verlaufende Ausnehmungen auf, die jeweils von einer Klaue 36 durchgriffen werden. Die Klauen 36 sind starr mit dem Zahnrad 28 verbunden, so daß der Außenring 34 und die Welle 14 mitdrehbar mit dem Zahnrad 28 gekoppelt sind, jedoch mit geringem Spiel relativ zu dem Zahnrad verdrehbar sind. In den Zwischenräumen zwischen den Klauen 36 sind jeweils zwei Wälzkörper 38 und ein zwischen ihnen liegendes Klemmelement 40 angeordnet.

Der Außenring 34 hat einen leicht polygonalen Innenquerschnitt, so daß sich der Zwischenraum zwischen dem Außenring und dem Innenring jeweils von den Klemmelementen 40 aus zu den Klauen 36 hin verengt. Wenn ein Drehmoment in irgendeiner Richtung auf das Zahnrad 28 wirkt, so drücken die Klauen 36 jeweils den vor ihnen liegenden Wälzkörper 38 gegen das zugehörige Klemmelement und halten den Wälzkörper so in einer Stellung, in der er an dem Innenring 32 abrollen kann. Der Außenring 34 und die Welle sind daher gemeinsam mit den Klauen 36 drehbar, so daß das Drehmoment von dem Zahnrad 28 auf die Welle 14 übertragen wird. Wenn dagegen ein Drehmoment in irgendeiner Richtung auf die Welle 14 wirkt, so hat der mit der Welle verbundene Außenring 34 die Tendenz, sich relativ zu dem Innenring 32 zu verdrehen, und die Wälzkörper 38 verklemmen sich in dem Zwischenraum zwischen Innen- und Außenring. Auf diese Weise wird die Welle 14 selbsthemmend blockiert.

Im Bereich zwischen den Klinken 20, 22 bildet die Grundplatte 10 eine Führungskontur 42, die mit an den Klinken 20 und 22 ausgebildeten Nocken 44, 46 zusammenwirkt. Weiterhin ist in Figur 1 gestrichelt ein Schaltelement 48 angedeutet, dessen Außenkontur teilweise mit der Führungskontur 42 kongruent ist und dessen Funktion später beschrieben wird.

In Figur 1 sind der Hebel 18 und das Gehäuse 16 in einer Neutralstellung dargestellt. Das Gehäuse 16 nimmt im oberen Bereich in Figur 1 eine nicht gezeigte Rückstellfeder auf, die dazu dient, das Gehäuse und den Hebel relativ zu der Grundplatte 10 in diese Neutralstellung zurückzustellen. Mögliche Gestaltungen der Rückstellfeder werden in EP-A-0 743 221 und in DE-U-298 02 055 beschrieben. In diesen Druckschriften werden auch der Aufbau und die Wirkungsweise der Freilaufbremse 30 innerhalb eines Sitzverstellers detaillierter beschrieben. In der letzgenannten Druckschrift wird außerdem ein Verriegelungsmechanismus gezeigt, mit dem sich der Hebel und das Gehäuse zusätzlich in der Neutralstellung verriegeln lassen. Ein solcher Mechanismus kann auch bei den hier gezeigten Ausführungsbeispielen vorgesehen sein.

Wenn der Hebel 18 von Hand aus der in Figur 1 gezeigten Neutralstellung verschwenkt wird, beispielsweise im Gegenuhrzeigersinn, so steht die Klinke 20 mit der Zahnung 26 in Eingriff, so daß das Drehmoment des Hebels auf das Zahnrad 28 und weiter auf die Welle 14 übertragen wird. Der Nocken 46 der anderen Klinke 22 gleitet dabei auf die Führungskontur 42 auf und bewirkt, daß die Klinke 22 von der Zahnung 26 weggeschwenkt wird. Wenn der Hebel 18 danach wieder in die Neutralstellung zurückbewegt wird, so wird das Zahnrad 28 durch die Freilaufbremse 30 in der erreichten Position gehalten, und der Hebel 18 und das Gehäuse 16 bewegen sich allein wieder in Neutralstellung zurück. Wenn der Hebel 18 in entgegengesetzter Richtung aus der Neutralstellung verschwenkt wird, sind die Funktionen der Klinken 20 und 22 vertauscht.

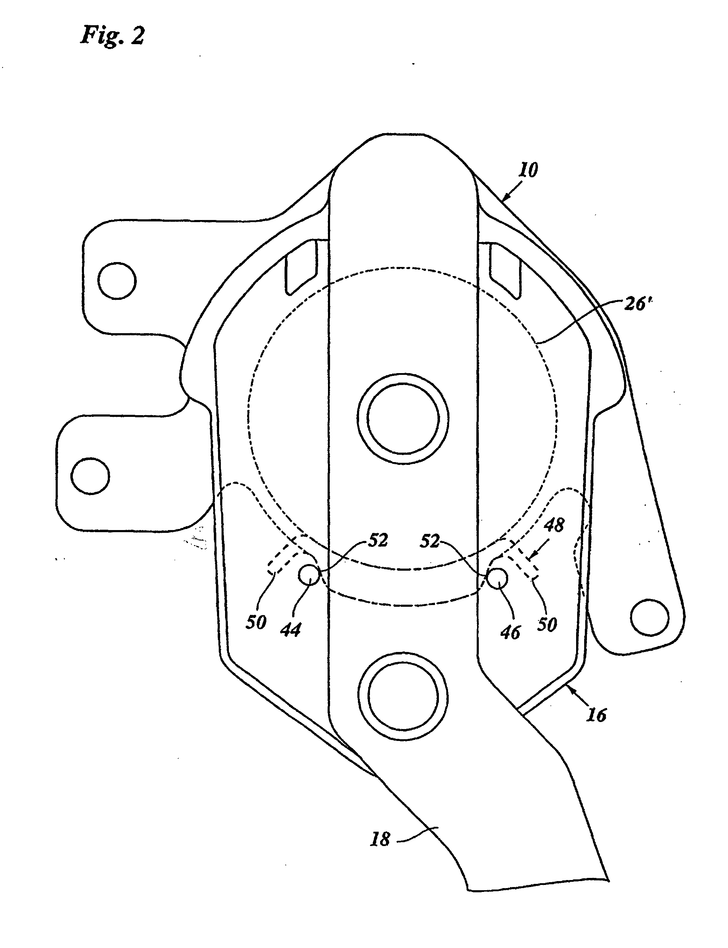

In Figur 2 ist der Verstellmechanismus stärker schematisiert dargestellt. Von den Klinken 20,22 sind nur die Nocken 44, 46 gezeigt, so daß die Kontur des Schaltelements 48 deutlicher erkennbar ist. Das Schaltelement stützt sich an einer kreisförmigen Führung 26' ab, deren Umriß etwa der Zahnung 26 des Zahnrads 28 in Figur 1 entspricht. Die Führung 26' kann unmittelbar durch die Zahnung 26 oder durch einen zahnfreien Bund des Zahnrads 28 gebildet werden, sie kann jedoch beispielsweise auch an der Grundplatte 10 ausgebildet sein. Da die Klinken 20, 22 elastisch gegen das Zahnrad vorgespannt sind, wird das Schaltelement 48 durch die Nocken 44 und 46 klemmend an der Führung 26' in Position gehalten, so daß keine besonderen Befestigungseinrichtungen für das Schaltelement erforderlich sind.

Das Schaltelement 48 ist mit gewisser Reibung längs der Führung 26', also parallel zu der Zahnung 26 beweglich und weist an beiden Enden symmetrisch gestaltete Anschläge 50 für die Nocken 44 und 46 auf. Der Mittelteil des Schaltelemens ist zu der an der Grundplatte 10 ausgebildeten Führungskontur 42 kongruent und bildet symmetrische Rampenflächen 52, an denen die Nocken 44, 46 anliegen, wenn sich der Hebel und das Gehäuse 16 in der Neutralstellung befinden.

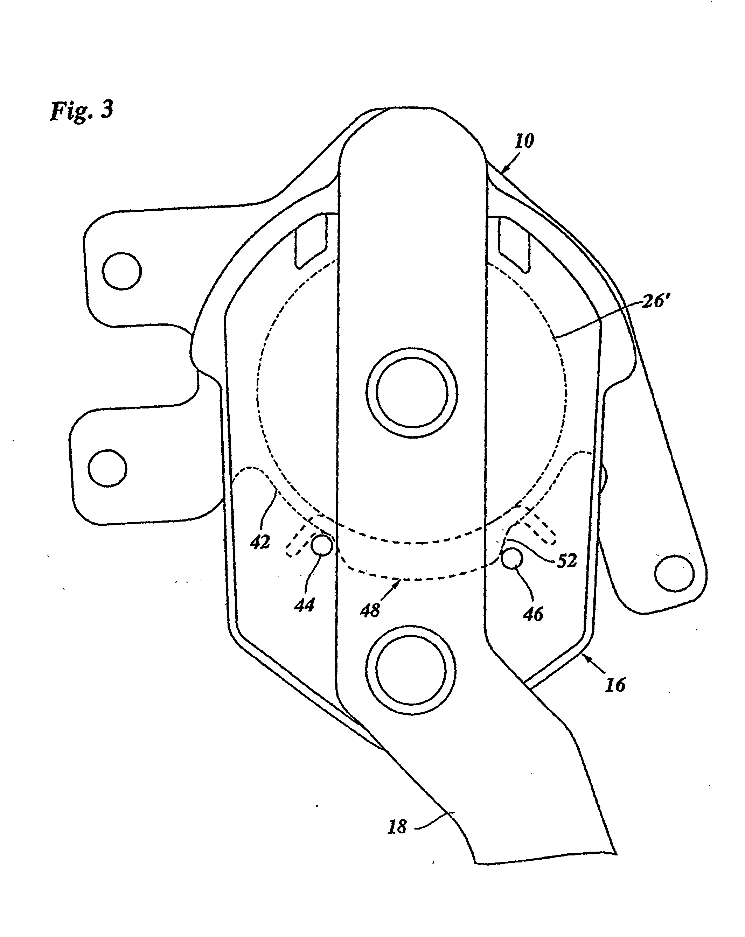

Figur 3 zeigt den Zustand, in dem der Hebel 18 und das Gehäuse 16 geringfügig aus der Neutralstellung verschwenkt sind. Die Nocken 44, 46 haben sich entsprechend der Bewegung des Hebels 18 relativ zu der Führungskontur 42 an der Grundplatte 10 verlagert. Der Nocken 44 ist aufgrund der elastischen Vorspannung näher an das Zahnrad herangerückt, so daß die zugehörige Klinke mit der Zahnung in Eingriff ist. Der Nocken 46 ist dagegen durch die Rampenfläche 52 des Schaltelements und/oder durch die entsprechende Rampenfläche der Führungskontur 42 von der Zahnung weggedrückt worden.

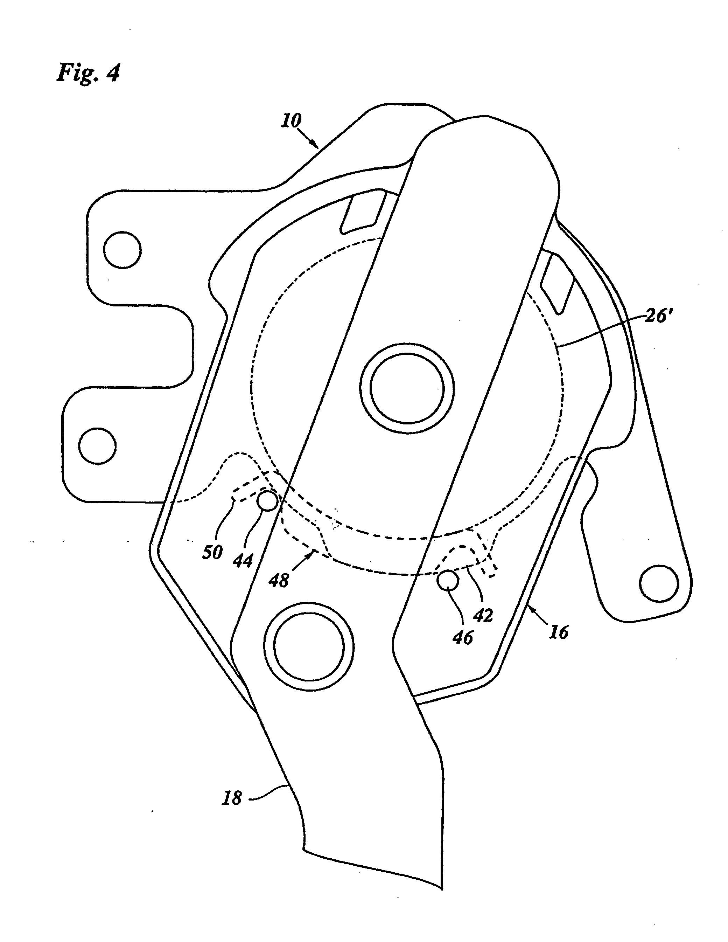

Wenn der Hebel 18 weiter im Uhrzeigersinn verschwenkt wird, so wird das Zahnrad 28 durch die Klinke 20 mitgenommen, und die Sitzhöhe wird entsprechend verstellt. Dabei beaufschlagt der Nocken 44 den Anschlag 50 des Schaltelements 48, so daß das Schaltelement längs der Führung 26' verschoben wird. Der Nocken 46 der anderen Klinke wird entweder durch das Schaltelement 48 oder durch die Führungskontur 42 in einer von der Zahnung abgerückten Position gehalten, wie in Figur 4 zu erkennen ist. Vorzugsweise ist die Kontur des Schaltelements so gewählt, daß der Nocken 46 in dieser Stellung an dem Schaltelement anliegt und dieses gegen die Führung 26' andrückt

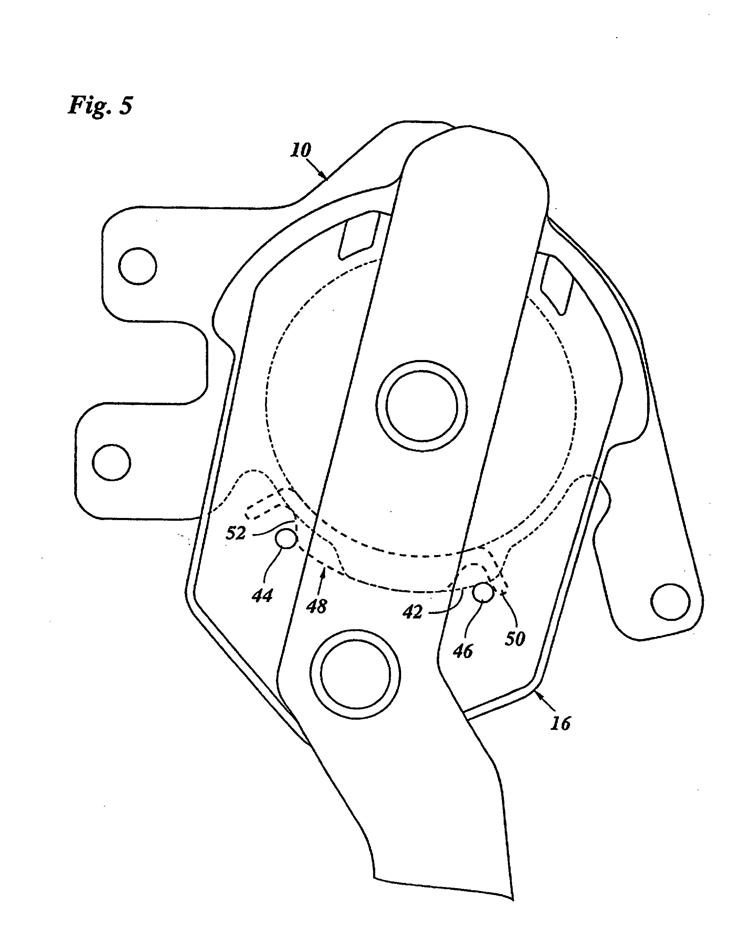

Wenn anschließend der Hebel 18 wieder in Gegenrichtung bewegt wird, so wird das Schaltelement 48 zunächst reibschlüssig in seiner Position gehalten. Der Nocken 46 rückt von der Rampenfläche 52 des Schaltelements ab, wird jedoch weiterhin durch die Führungskontur 42 abgestützt und schlägt schließlich an dem Anschlag 50 des Schaltelements an. Währenddessen gleitet der Nocken 44 auf die andere Rampenfläche 52 des Schaltelements auf und wird dadurch von der Zahnung des Zahnrads 28 abgehoben, wie in Figur 5 gezeigt ist. Während der anschließenden Rückbewegung des Hebels 18 in die Neutralstellung ist somit keine der Klinken 20, 22 mit der Zahnung 26 in Eingriff, so daß die Rückstellbewegung geräuschfrei erfolgt. Sobald der Hebel 18 wieder die Neutralstellung erreicht, erlaubt es die Führungskontur 42, daß sich der Nocken 46 wieder der Zahnung 26 annährt, und der Nocken 44 schlägt an der entgegengesetzten Flanke der Führungskontur 42 an, so daß wieder der in Figur 2 gezeigte Zustand erreicht wird.

Wenn dagegen aus der in Figur 5 gezeigten Position heraus der Hebel 18 erneut in Uhrzeigerrichtung verschwenkt wird, so gleitet der Nocken 44 an der Rampenfläche 52 entlang. und die Klinke 20 tritt wieder mit der Zahnung in Eingriff, so daß das Zahnrad 18 weiter in Uhrzeigerrichtung gedreht werden kann.

Wenn der Hebel 18 im Gegenuhrzeigersinn aus der Neutralstellung verschwenkt wird, ist der Bewegungsablauf analog zu dem oben beschriebenen.

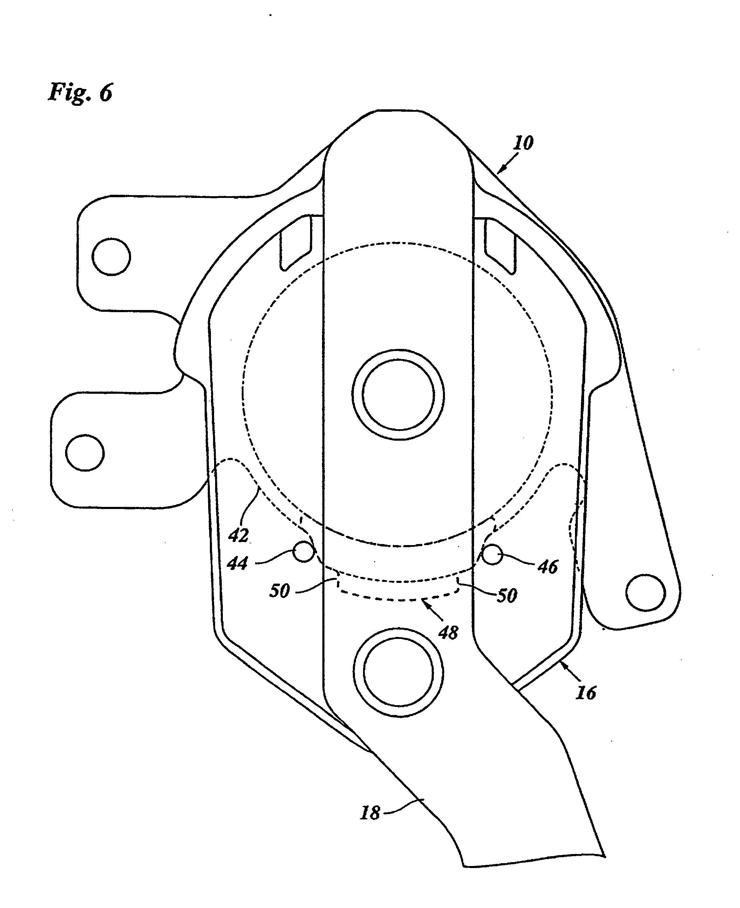

Figur 6 zeigt ein abgewandeltes Ausführungsbeispiel, bei dem das Schaltelement 48 eine etwas andere Kontur hat. Die Anschläge 50 sind hier zwischen den Nocken 44 und 46 angeordnet. Während bei dem Ausführungsbeispiel nach Figuren 1 bis 5 das Schaltelement jeweils durch den vorauslaufenden Nocken gezogen wird, wird es bei der Ausführungsform nach Figur 6 durch den jeweils nachlaufenden Nocken geschoben. Im übrigen ist die Funktionsweise dieselbe wie bei dem ersten Ausführungsbeispiel.

Ein erwünschter Reibschluß zwischen dem Schaltelement 48 und der Grundplatte 10 läßt sich bei beiden Ausführungsformen wahlweise oder zusätzlich auch dadurch erreichen, daß das plattenförmige Schaltelement "sandwichartig" zwischen der Grundplatte und einem anderen Bauteil gehalten oder mit Hilfe eines Federelements elastisch gegen die Grundplatte angedrückt wird.

## Patentansprüche

1. Verstellmechanismus, insbesondere für Sitzversteller in Kraftfahrzeugen, mit einem in entgegengesetzte Richtungen bewegbaren, eine Zahnung (26) aufweisenden Antriebselement (28), einem Betätigungsorgan (18), an dem zwei Klinken (44, 46) derart beweglich gelagert sind, daß jeweils eine der beiden Klinken mit der Zahnung (26) in Eingriff ist, wenn das Betätigungsorgan aus einer Neutralstellung heraus in einer Richtung längs der Zahnung (26) bewegt wird, und mit einer Führungskontur (42), die die jeweilige andere Klinke von der Zahnung abhebt, **gekennzeichnet durch** ein längs der Zahnung (26) bewegliches Schaltelement (48), das bei der Bewegung des Betätigungsorgans (18) mitgenommen wird und bei der Rückkehr in die Neutralstellung den Eingriff zwischen Klinke und Zahnung aufhebt.

2. Verstellmechanismus nach Anspruch 1, **dadurch gekennzeichnet, daß** das Schaltelement (48) symmetrisch angeordnete Rampenflächen (52) aufweist, die mit den Klinken (20, 22) oder mit daran ausgebildeten Nocken (44, 46) zusammenwirken, und daß das Schaltelement (48) reibschlüssig an dem Antriebselement (18) und/oder einem stationären Bauteil (10) gehalten ist

3. Verstellmechanismus nach Anspruch 2, **dadurch gekennzeichnet, daß** sich das Schaltelement (48) an einer parallel zu der Zahnung (26) verlaufenden Führung (26') abstützt.

4. Verstellmechanismus nach Anspruch 3, **dadurch gekennzeichnet, daß** die Klinken (20, 22) elastisch gegen die Zahnung (26) vorgespannt sind und das Schaltelement (48) elastisch mit der Führung (26') in Anlage halten.

5. Verstellmechanismus nach einem der vorstehenden Ansprüche, dadurch **gekennezeichnet,** daß das Schaltelement (48) symmetrisch angeordnete Anschläge (50) aufweist und daß bei der Bewegung des Betätigungsorgans (18) in der einen oder anderen Richtung jeweils einer der Anschläge (50) durch eine der Klinken (20, 22) beaufschlagt wird, während die andere Klinke durch das Schaltelement von der Zahnung (26) ferngehalten wird.

6. Verstellmechanismus nach einem der vorstehenden Ansprüche, **dadurch gekennzeichnet, daß** das Antriebselement (28) ein Außen- oder Innenzahnrad ist, das über eine Freilaufbremse (30) mit einer das Abtriebsorgan des Verstellmechanismus bildenden Welle (14) in Antriebsverbindung steht.

7. Verstellmechanismus nach Anspruch 6, **dadurch gekennzeichnet, daß** die Führungskontur (42) an einer Grundplatte (10) ausgebildet ist und daß das Betätigungsorgan (18) mit einem Gehäuse (16) verbunden ist, das relativ zu der Grundplatte (10) schwenkbar ist und das Antriebselement (28), die Klinken (20, 22) und das Schaltelement (48) aufnimmt.

## Claims

1. Adjusting mechanism, in particular for seat adjusters in motor vehicles, with a drive element (28), which can move in opposite directions and comprises a tooth system (26), an actuating member (18), at which two pawls (44, 46) are mounted in a mobile fashion such that one of the two pawls is in each case engaged with the tooth system (26) when the actuating member is moved out of a neutral position in a direction along the tooth system (26), and with a guide contour (42) which lifts the respective other pawl off the tooth system, **characterised by** a shift element (48) which can move along the tooth system (26), is entrained when the actuating member (18) moves and terminates the engagement between the pawl and the tooth system upon the return to the neutral position.

2. Adjusting mechanism according to Claim 1, **characterised in that** the shift element (48) comprises symmetrically disposed ramp faces (52) which co-operate with the pawls (20, 22) or with cams (44, 46) which are formed thereon, and that the shift element (48) is retained frictionally at the drive element (18) and/or a stationary component (10).

3. Adjusting mechanism according to Claim 2, **characterised in that** the shift element (48) is supported at a guide (26') extending parallel to the tooth system (26).

4. Adjusting mechanism according to Claim 3, **characterised in that** the pawls (20, 22) are elastically preloaded towards the tooth system (26) and elastically retain the shift element (48) in abutment with the guide (26').

5. Adjusting mechanism according to any one of the preceding Claims, **characterised in that** the shift element (48) comprises symmetrically disposed stops (50), and that, when the actuating member (18) moves in one or the other direction, one of the pawls (20, 22) in each case acts on one of the stops (50), while the other pawl is held away from the tooth system (26) by the shift element.

6. Adjusting mechanism according to any one of the preceding Claims, **characterised in that** the drive element (28) is an external or an internal gear wheel which is in driving connection via a free-wheel brake (30) with a shaft (14) forming the driven member of the adjusting mechanism.

7. Adjusting mechanism according to Claim 6, **characterised in that** the guide contour (42) is formed at a base plate (10), and that the actuating member (18) is connected to a housing (16) which can pivot relative to the base plate (10) and accommodates the drive element (28), the pawls (20, 22) and the shift element (48).

## Revendications

1. Mécanisme de réglage, en particulier pour dispositif de réglage de siège de véhicule automobile, avec un élément d'entraînement (28) déplaçable dans des directions opposées et comportant une denture (26), un organe d'actionnement (18) sur lequel sont montés mobiles deux cliquets (44, 46) de manière que dans chaque cas, l'un des deux cliquets soit en engagement avec la denture (26), lorsque l'organe d'actionnement est déplacé depuis une position neutre dans une direction le long de la denture (26), et avec un contour de guidage (42) qui soulève l'autre cliquet de la denture, **caractérisé par** un élément de manoeuvre (48) déplaçable le long de la denture (26), qui est entraîné lors du mouvement de l'organe d'actionnement (18) et qui, lors du retour dans la position neutre, supprime l'engagement entre le cliquet et la denture.

2. Mécanisme de réglage selon la revendication 1, **caractérisé en ce que** l'élément de manoeuvre (48) comporte des surfaces de rampe (52) disposées symétriquement, qui coopèrent avec les cliquets (20, 22) ou avec des cames (44, 46) réalisées sur ceux-ci, et **en ce que** l'élément de manoeuvre (48) est maintenu par friction sur l'élément d'entraînement (18) et/ou sur un composant (10) fixe.

3. Mécanisme de réglage selon la revendication 2, **caractérisé en ce que** l'élément de manoeuvre (48) prend appui contre un guide (26') s'étendant parallèlement à la denture (26).

4. Mécanisme de réglage selon la revendication 3, **caractérisé en ce que** les cliquets (20, 22) sont précontraints élastiquement contre la denture (26) et maintiennent l'élément de manoeuvre (48) élastiquement en contact avec le guide (26').

5. Mécanisme de réglage selon l'une des revendications précédentes, **caractérisé en ce que** l'élément de manoeuvre (48) comporte des butées (50) disposées symétriquement et **en ce que** lors du mouvement de l'organe d'actionnement (18), dans une direction ou dans l'autre, l'une des butées (50) est sollicitée par l'un des cliquets (20, 22), tandis que l'autre cliquet est éloigné de la denture (26) par l'élément de manoeuvre.

6. Mécanisme de réglage selon l'une des revendications précédentes, **caractérisé en ce que** l'élément d'entraînement (28) est une roue à denture externe ou à denture interne qui est en liaison d'entraînement, par un frein à roue libre (30), avec un arbre (14) formant l'organe mené du mécanisme de réglage.

7. Mécanisme de réglage selon la revendication 6, **caractérisé en ce que** le contour de guidage (42) est réalisé sur une plaque de base (10) et **en ce que** l'organe d'actionnement (18) est relié à un carter (16) qui peut pivoter par rapport à la plaque de base (10) et reçoit l'élément d'entraînement (28), les cliquets (20, 22) et l'élément de manoeuvre (48).
